# EUROPÄISCHE PATENTSCHRIFT

(11) **EP 3 426 936 B1**
(45) Veröffentlichungstag und Bekanntmachung des Hinweises auf die Patenterteilung: **27.10.2021**
(21) Anmeldenummer: 17710216.7
(22) Anmeldetag: 10.03.2017
(51) Int. Cl.: F16B 21/12

(54) **KLAPPSPLINT MIT GESICHERTEM FEDERRING**
LINCHPIN HAVING A SECURED SPRING RING
GOUPILLE FENDUE PLIANTE À BAGUE ÉLASTIQUE FIXÉE

(30) Priorität: 11.03.2016 DE 102016104469
(43) Veröffentlichungstag der Anmeldung: 16.01.2019
(73) Patentinhaber: Mischko, Manfred, 83413 Fridolfing (DE)
(72) Erfinder: Mischko, Manfred, 83413 Fridolfing (DE)
(74) Vertreter: Canzler & Bergmeier Patentanwälte Partnerschaft mbB
(86) Internationale Anmeldenummer: PCT/EP2017/055619
(87) Internationale Veröffentlichungsnummer: WO 2017/153554

(56) Entgegenhaltungen:
- EP-A2- 0 056 228
- DE-B4-102012 003 082
- FR-A- 1 475 312
- US-A- 4 036 097

## Beschreibung

Die vorliegende Erfindung betrifft einen Klappsplint zur Sicherung von Maschinenteilen wie Achsen oder Steckbolzen, mit einem Bolzen, der im Bereich seines kopfseitigen Endes zwei Bohrungen und eine Arretiervertiefung aufweist, und einem offenen Federring, der im Bereich seiner beiden Enden in den beiden Bohrungen drehbar gelagert ist, so dass dieser zwischen einer Offenstellung und einer Schließstellung verschwenkbar ist, und einen mit der Arretiervertiefung des Bolzens derart korrespondierenden Arretierabschnitt aufweist, dass der Federring in der Schließstellung arretiert ist und aus dieser wieder in die Offenstellung schwenkbar ist, wenn der Arretierabschnitt in Querrichtung des Bolzens von einer Verriegelungsposition ausgehend aus der Arretiervertiefung heraus in eine Entriegelungsposition geschoben ist.

Aus der FR 1 475 312 A ist ein Klappsplint bekannt. Er umfasst einen ersten Nocken, über den ein Ende eines flexiblen Clips durch vorübergehende Verformung eingreifen kann, wenn er blockiert ist, und der gehalten werden muss, um keine Rückwärtsbewegung ausführen zu können. Ferner umfasst dieser einen zweiten Nocken, der auf das andere Ende des Clips wirkt, um den Clip in der Verriegelungsposition unter Spannung zu halten. Der Klappsplint umfasst einen Nocken auf einer Seite seines Kopfes, der von einem Loch durchsetzt ist, um ein Ende der flexiblen Klammer aufzunehmen, und ein Sackloch von begrenzter Tiefe, um das andere Ende der flexiblen Klammer aufzunehmen, wobei dieser Nocken den kuppelförmigen Kopf eines Niets aufweist, der in das zweite genannte Loch eingreift, um eine Sackbohrung zu bilden, die die Tiefe dieses Lochs verringert, um das Eindringen des zugehörigen Endes der flexiblen Klammer zu begrenzen, um diese unter Spannung zu halten, wenn die Klammer in eine Verriegelungsposition gebracht wird.

Aus der DE 10 2012 003 082 B4 ist ein Klappsplint zur Sicherung von Maschinenteilen, wie Achsen oder Steckbolzen, bekannt. Zumindest die nachfolgend genannten, aber auch die übrigen in der DE 10 2012 003 082 B4 genannten Merkmale können einzeln oder in beliebiger Kombination Bestandteil der vorliegend beschriebenen Erfindung sein. Der Klappsplint der DE 10 2012 003 082 B4 umfasst einen Bolzen, an dessen einem axialen Ende ein Kopfteil ausgebildet ist, in dem zwei Bohrungen ausgebildet sind, wobei die Bohrungen normal zur Achse des Bolzens verlaufen und in axialer Richtung des Bolzens zueinander versetzt angeordnet sind. Des Weiteren umfasst der Klappsplint einen offenen Federring, dessen beide Enden in jeweils eine der beiden Bohrungen eingesteckt sind, wobei der Federring um die Achsen der Bohrungen herum verschwenkbar ausgebildet ist. Am Kopfteil ist im Bereich und benachbart zu einer der Bohrungen eine Längsnut im Kopfteil ausgebildet, so dass ein zur Längsnut benachbarter Abschnitt des Federringes mit der Längsnut durch Verschwenken und/oder Verlagerung des Federringes in und außer Eingriff bringbar ist. Der Federring weist einen geradlinigen Abschnitt auf, der vorzugsweise im Wesentlichen unter 45° zur Achse des Bolzens verläuft und ein Ende eines kreisringförmigen Abschnitts des Federrings mit dem Abschnitt verbindet. Der Abschnitt ist aus der Längsnut heraushebbar, wenn von außen Kraft auf das Kopfteil aufgebracht wird. Die zwei Bohrungen sind entweder beide als Sackbohrungen oder beide als Durchgangsbohrungen ausgebildet.

Nachteilig hierbei ist, dass sich der Federring in der Schließstellung bei äußerer Krafteinwirkung relativ zum Bolzen in Querrichtung des Klappsplints verlagern kann. Hierdurch geht eine Verlagerung des Abschnitts relativ zur Längsnut in Querrichtung des Bolzens einher. Bei ungünstiger Verlagerung besteht eine erhöhte Gefahr, dass der Abschnitt unbeabsichtigt aus der Längsnut rutscht. Ein weiterer Nachteil besteht darin, dass der Federring in der zurückgeklappten Offenstellung nur mit sehr hohem Kraftaufwand und infolgedessen nur äußerst umständlich in die Schließstellung klappbar ist. Des Weiteren kann dieser Klappsplint händisch nicht mehr geöffnet werden, wenn dieser versehentlich ohne ein daran angeordnetes Maschinenteil in die Schließstellung klappt wurde.

Aufgabe der vorliegenden Erfindung ist es somit, einen Klappsplint zu schaffen, mit dem die vorstehenden Nachteile beseitigt werden können.

Die Aufgabe wird gelöst durch einen Klappsplint mit den Merkmalen des Patentanspruchs 1.

Vorgeschlagen wird ein Klappsplint zur Sicherung von Maschinenteilen, wie Achsen oder Steckbolzen, mit einem Bolzen, der im Bereich seines kopfseitigen Endes zwei Bohrungen und eine Arretiervertiefung, die insbesondere als Arretiernut ausgebildet ist, aufweist. Die beiden Bohrungen sind vorzugsweise in Längsrichtung und Hochrichtung des Bolzens zueinander versetzt und/oder erstrecken sich zueinander parallel in Querrichtung des Bozens. Ferner ist die Arretiervertiefung vorzugsweise an einer Längsseite des Bolzens angeordnet, die einer der beiden Bohrungen zugeordnet ist. Des Weiteren weist der Klappsplint einen offenen Federring auf, der im Bereich seiner beiden Enden in den beiden Bohrungen drehbar gelagert ist. Hierdurch ist der Federring zwischen einer zurückgeklappten Offenstellung und einer vorgeklappten Schließstellung verschwenkbar. In der Offenstellung ist vorzugsweise ein Schwenkende des Federrings von einem im Bereich der Spitze des Bolzens ausgebildeten Schwenkanschlag beabstandet. In der Schließstellung liegt das Schwenkende vorzugsweise in diesem Schwenkanschlag an. Der Federring weist einen mit der Arretiervertiefung des Bolzens derart korrespondierenden Arretierabschnitt auf, dass der Federring in der Schließstellung arretiert ist und aus dieser wieder in die Offenstellung schwenkbar ist, wenn der Arretierabschnitt in Querrichtung des Bolzens ausgehend von einer in Querrichtung eingerückten Verriegelungsposition aus der Arretiervertiefung heraus in eine Entriegelungsposition geschoben und/oder gedrückt ist.

Vorteilhaft ist es, wenn der Bolzen zwei Queranschläge aufweist, die zueinander einen ersten Querabstand aufweisen. Des Weiteren weist der Federring zwei Anschlagsbereiche auf, die im ausgebauten Zustand des Federrings zueinander einen zum ersten Querabstand derart unterschiedlichen zweiten Querabstand aufweisen, dass die Anschlagsbereiche des Federrings im eingebauten Zustand und/oder in der Schließstellung federbeaufschlagt gegen die jeweils korrespondierenden Queranschläge des Bolzens gedrückt sind. Hierdurch weist der Federring relativ zum Bolzen in Querrichtung des Klappsplints kein Spiel auf. Infolgedessen kann sich der Federring in der Schließstellung bei äußerer Krafteinwirkung relativ zum Bolzen in Querrichtung des Klappsplints nicht verlagern. Hierdurch weist auch der Arretierabschnitt relativ zur Arretiervertiefung eine festgelegte und durch äußere Störeinflüsse nicht beeinflussbare Position auf. Vorteihafterweise muss der Arretierabschnitt somit immer um denselben Verschiebeweg in Querrichtung des Bolzens verschoben werden, so dass dieser zuverlässig und sicher in der Arretiervertiefung verriegelt ist. Ein unbeabsichtigtes Entriegeln aufgrund von äußeren Krafteinwirkungen kann somit vermieden werden.

Erfindungsgemäß weist der Bolzen, insbesondere auf der Seite der Arretiervertiefung und/oder zu dieser benachbart, eine Anlaufschräge auf. Die Anlaufschräge ist derart ausgebildet und/oder derart angeordnet, dass mittels dieser der Arretierabschnitt beim Verschwenken aus der Offenstellung in Richtung der Schließstellung in Querrichtung des Bolzens nach außen in die Entriegelungsposition verschiebbar ist. Hierdurch kann sichergestellt werden, dass der in der Offenstellung befindliche und in Bolzenquerrichtung wieder aus der Entriegelungsposition federbeaufschlagt in Richtung der Verriegelungsposition gedrückte Federring, insbesondere der Arretierabschnitt, leicht - d.h. ohne großen Kraftaufwand - aus der Offenstellung in die Schließstellung klappbar ist. Hierbei kommt vorzugsweise der Arretierabschnitt des Federrings an der Anlaufschräge zum Anliegen und wird kontinuierlich beim Verschwenken in Richtung der Schließstellung in Bolzenquerrichtung nach außen gedrückt, bis dieser die Entriegelungsposition erreicht. Beim Weiterschwänken des Federrings rastet der Arretierabschnitt dann in der Arretiervertiefung ein. Der Arretierabschnitt wird somit mittels der Anlaufschräge automatisch in Querrichtung des Bolzens zur Arretiervertiefung hingeführt. Durch den mittels der Anlaufschräge definierten Schwellwert - der überwunden werden muss, um den Federring aus der Offenstellung in die Schließstellung führen zu können - ist der Federring sicher in seiner Ruhestellung bzw. Offenstellung positioniert. Hierdurch kann einem unbeabsichtigten Zuklappen des Federrings entgegengewirkt werden. Zugleich kann dieser jedoch beim Überschreiten des Schwellwertes benutzerfreundlich mit hohem Komfort zugeklappt, d.h. in die Schließstellung geklappt werden.

Vorteilhaft ist es, wenn die der Arretiervertiefung zugeordnete Bohrung als Durchgangsbohrung ausgebildet ist, wenn sich ein zum Arretierabschnitt benachbarter Lagerabschnitt des Federrings vollständig durch die Durchgangsbohrung hindurcherstreckt und wenn der Federring einen sich an den Lagerabschnitt anschließenden Entriegelungsabschnitt aufweist, der koaxial zum Lagerabschnitt ausgebildet ist und/oder in der Schließstellung des Federrings mit einer Entriegelungslänge über die Durchgangsbohrung hinaussteht. Die Entriegelungslänge ist derart groß, dass der Arretierabschnitt, insbesondere beim Hineindrückten des Entriegelungsabschnitts in die Durchgangsbohrung, aus der Verriegelungsposition in die Entriegelungsposition drückbar ist. Vorteilhafterweise kann der Klappsplint, insbesondere händisch und ohne Verwendung zusätzlicher Hilfsmittel, wie z.B. Schraubenzieher, somit entriegelt werden. Dies ist insbesondere dann vorteilhaft, wenn der Federring in die Schließstellung geklappt wurde, ohne zuvor an einem Maschinenteil - das gemäß der nachfolgenden Beschreibung zum Entriegeln benutz werden kann - angeordnet worden zu sein. Durch einfache Kraftaufbringung, beispielsweise mittels des Daumens, von Seiten des Entriegelungsabschnitts, kann somit dieser zusammen mit dem Lagerabschnitt und dem Arretierabschnitt zum Entriegeln des Federrings in Querrichtung verschoben werden.

Vorteilhaft ist es, wenn der Federring im eingebauten Zustand im Bereich seiner beiden Enden federbeaufschlagt auseinandergespreizt ist und/oder dass der erste Querabstand größer als der zweite Querabstand ist.

Ebenso ist es vorteilhaft, wenn eine der beiden Bohrungen, insbesondere die auf der der Arretiervertiefung abgewandten Längsseite des Bolzens angeordnete Bohrung, als Sackloch und/oder die andere, insbesondere die auf der der Arretiervertiefung zugeordneten Längsseite des Bolzens angeordnete Bohrung, als Durchgangsbohrung ausgebildet ist.

Auch ist es äußert vorteilhaft, wenn ein Sacklochboden des Sacklochs den einen Queranschlag und/oder ein Vertiefungsboden der Arretiervertiefung den anderen Queranschlag bildet und/oder dass eine dem Sacklochboden zugewandte Stirnseite des Federrings den einen Anschlagsbereich und/oder zumindest ein Teil einer dem Vertiefungsboden zugewandten Anlageseite des Arretierabschnitts den anderen Anschlagsbereich bildet.

Auch ist es von Vorteil, wenn sich ein zum Arretierabschnitt benachbarter Lagerabschnitt des Federrings vollständig durch die Durchgangsbohrung hindurcherstreckt und/oder dass der Federring einen sich an den Lagerabschnitt anschließenden Entriegelungsabschnitt aufweist, der in der Schließstellung des Federrings mit einer Entriegelungslänge über die Durchgangsbohrung hinaussteht.

Ebenso bringt es Vorteile mit sich, wenn die Entriegelungslänge größer oder gleich eines Verschiebeweges ist, der mindestens notwendig ist, um den Arretierabschnitt aus der Arretiervertiefung heraus, insbesondere von der Verriegelungsposition in die Entriegelungsposition, zu verschieben.

Vorteilhaft ist es, wenn die Entriegelungslänge größer oder gleich einer Tiefe der Arretiervertiefung ist.

Auch ist es äußert vorteilhaft, wenn der Federring am Ende des Entriegelungsabschnitts eine Druckfläche aufweist, die im Vergleich zu einer Drahtquerschnittsfläche des Federrings größer ausgebildet ist. Der Federring ist aus einem Federdraht mit einem entsprechenden Drahtdurchmesser bzw. einer entsprechenden Drahtquerschnittsfläche hergestellt.

Ebenso ist es vorteilhaft, wenn der Bolzen unmittelbar benachbart zur Anlaufschräge und/oder im Bereich ihres Anfangs, d.h. in der Seitenansicht im Bereich ihres der Ruheposition bzw. Offenstellung des Arretierabschnitts zugewandten Endes, eine Rastkante aufweist. Diese muss dann mittels einer Schwellkraft überdrückt werden, um den Federring von der Offenstellung in Richtung der Schließstellung und/oder in den Bereich der Anlaufschräge zu schwenken. Hierdurch kann ein unbeabsichtigtes Zuschnappen des Federrings und damit einhergehende Verletzungen eines Benutzers vermieden werden.

Vorteile bringt es zudem mit sich, wenn die Breite der Rastkante, insbesondere in einer Rückansicht des Bolzens, kleiner oder gleich einem Drahtradius des Federrings ist und/oder dass sich die Rastkante tangential zur Durchgangsbohrung erstreckt. Bei einer in Längsrichtung orientierten Kraft, wird der Federring somit durch die Rastkante nicht vollständig blockiert, sondern kann an dieser vorbeigleiten.

Besondere Vorteile bringt es mit sich, wenn der Bolzen einen Endanschlag aufweist, bis zu dem der Federring aus der Schließstellung in Richtung der Offenstellung maximal verschwenkbar ist. Wenn der Federring beim Öffnen über die Offenstellung hinweggeschwenkt wird, stößt der Arretierabschnitt gegen den Endanschlag. Hierdurch wird ein Überklappen des Federrings und damit einhergehende Verletzungen vermieden.

Vorteilhaft ist es zudem, wenn der Federring einen, insbesondere zum Arretierabschnitt benachbarten und/oder zur Längsachse des Bolzens schräg verlaufenden, Gleitabschnitt aufweist, mittels dem der Arretierabschnitt in Querrichtung des Bolzens aus der Verriegelungsposition in die Entriegelungsposition verschiebbar ist, wenn kopfseitig von außen in Axialrichtung des Bolzens Kraft auf den Bolzen aufgebracht wird und das dafür vorgesehene Maschinenteil am Gleitabschnitt zum Anliegen kommt. Über das an dem Gleitabschnitt anliegende Maschinenteil wird somit die auf das Kopfteil ausgeübte Kraft derart aufgeteilt, dass eine Querkraftkomponente auf den Arretierabschnitt wirkt, mittels der dieser aus der Verriegelungsposition in die Entriegelungsposition verschiebbar ist.

Weitere Vorteile der Erfindung sind in den nachfolgenden Ausführungsbeispielen beschrieben. Es zeigt:
- **Figur 1a**: eine Seitenansicht eines Klappsplint in einer Offenstellung,
- **Figur 1b**: eine Seitenansicht des Klappsplint in einer Schließstellung,
- **Figur 2**: eine perspektivische Ansicht eines Bolzens des in Figur 1 dargestellten Klappsplints,
- **Figur 3**: eine Seitenansicht des Bolzens auf eine Arretiervertiefung,
- **Figur 4**: eine dazu gegenüberliegende Seitenansicht des Bolzens,
- **Figur 5**: eine Rückansicht des Bolzens auf ein kopfseitiges Bolzenende,
- **Figur 6a**: eine Draufsicht des Klappsplint im gesicherten Zustand mit einem in einer Verriegelungsposition befindlichen Arretierabschnitt und
- **Figur 6b**: eine Draufsicht des Klappsplint im entsicherten Zustand, bei der der Arretierabschnitt des Bolzens aus der in Figur 6a dargestellten Verriegelungsposition in eine ausgestellte Entriegelungsposition verschoben ist.

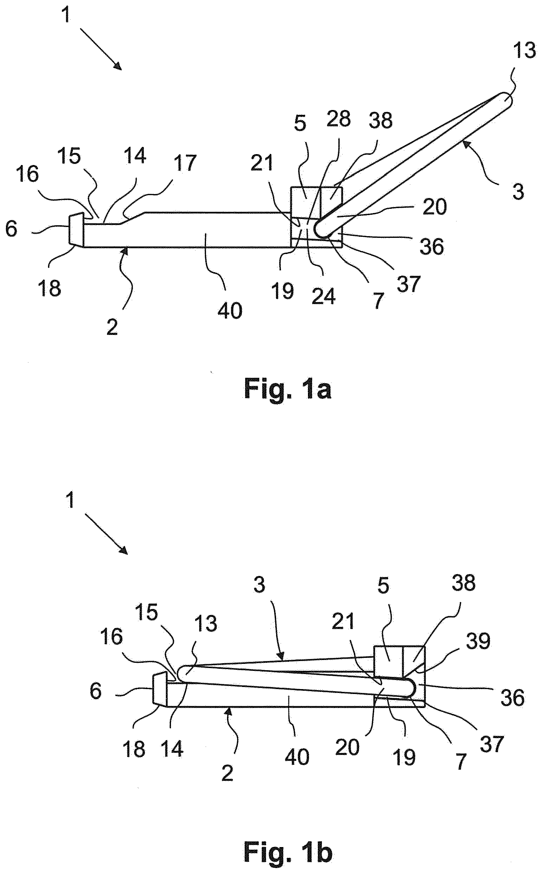

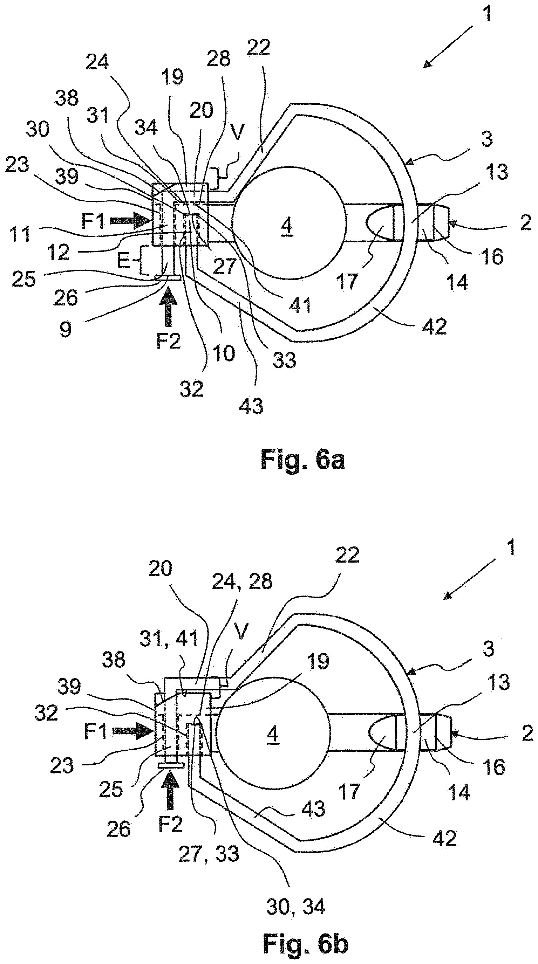

Figur 1a zeigt einen Klappsplint 1 in einer Seitenansicht. Der Klappsplint 1 umfasst einen Bolzen 2 und einen Federring 3. Der Bolzen 2 kann gemäß Figur 6a durch eine vorliegend nicht dargestellte Bohrung eines Maschinenteils 4 zu dessen Sicherung gesteckt werden. Um ein Herausgleiten des Bolzens 2 aus dieser Bohrung vermeiden zu können, wird der Federring 3 zur Sicherung aus der in Figur 1a dargestellten Offenstellung in die in Figur 1b dargestellte Schließstellung geklappt.

Der Bolzen 2 weist an seinem einen Ende einen Kopf 5 und an seinem anderen Ende eine Spitze 6 zum Einführen des Bolzens in die Bohrung des Maschinenteils 4 auf (vgl. Fig. 6a). Die Spitze 6 ist an einem Bolzenabschnitt 40 ausgebildet. An seinem der Spitze 6 abgewandten Ende des Bolzenabschnitts 40 befindet sich der Kopf 5.

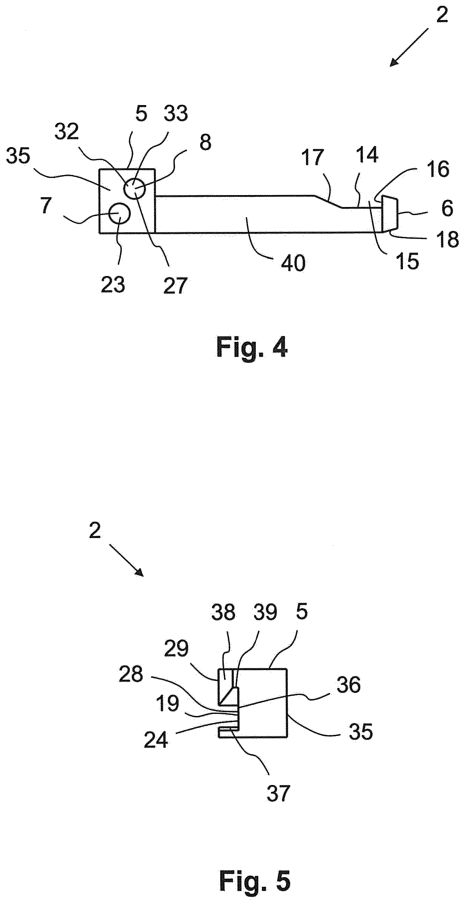

Im Bereich seines kopfseitigen Endes weist der Bolzen 2 zwei Bohrungen 7, 8 auf, die insbesondere in Figur 4 und Figur 6a ersichtlich sind. Der Federring 3 ist als offener Federring 3 ausgebildet und weist demnach zwei Enden 9, 10 auf, die in jeweils eine der beiden Bohrungen 7, 8 eingesteckt sind.

Wie insbesondere in Figur 6a ersichtlich ist, umfasst der Federring 3 zwei Lagerabschnitte 11, 12. Diese sind vorliegend geradlinig ausgebildet und erstrecken sich lotrecht zur Längsachse des Bolzens 2. Der Federring 3 ist somit um eine Querachse des Bolzens 2 zwischen der in Figur 1a dargestellten Offenstellung und der in Figur 1b dargestellten Schließstellung verschwenkbar.

In der in Figur 1a dargestellten Offenstellung ist der Federring 3 vorzugsweise in seiner Neutralstellung und weist demnach keine Federkraft auf. Im Gegensatz dazu ist der Federring 3 gemäß Figur 1b federbeaufschlagt in die Schließstellung gedrückt. Hierbei liegt der Federring 3 im Bereich eines Schwenkendes 13 an einem Schwenkanschlag 14 des Bolzens 2 an. Im Bereich des Schwenkanschlages 14 weist der Bolzen 2 eine Aussparung 15 auf. Die Aussparung 15 weist eine spitzenseitige erste Wand 16 und eine kopfseitige zweite Wand 17 auf. Die zweite Wand 17 ist nach hinten zum kopfseitigen Ende des Bolzens 2 geneigt. Hierdurch kann vermieden werden, dass der Bolzen 2, insbesondere der Bolzenabschnitt 40, beim Einführen in die nicht dargestellte Bohrung des Maschinenteils 4 an der zweiten Wand 17 hängen bleibt. Zum problemlosen Einführen des Bolzens 2 in die vorliegend nicht dargestellte Bohrung des Maschinenteils 4 weist der Bolzen 2 im Bereich seiner Spitze 6 des Weiteren eine Fase 18 auf.

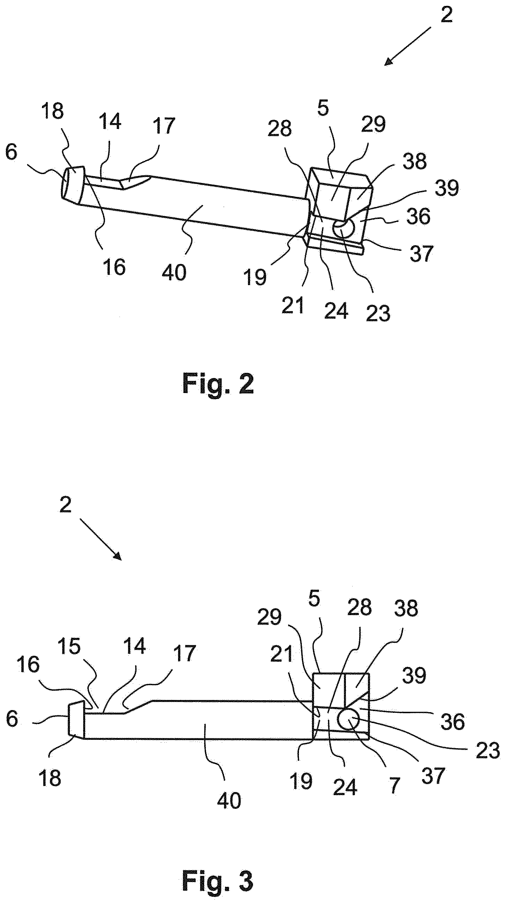

Zur Sicherung des Federrings 3 in der in Figur 1b dargestellten Schließstellung weist der Klappsplint 1 einen Arretiermechanismus auf. Dieser umfasst eine Arretiervertiefung 19, die an einer Längsseite des Bolzens 2 im Bereich des Kopfes 5 ausgebildet ist (vgl. Fig. 2, 6a). Des Weiteren umfasst der Arretiermechanismus einen am Federring 3 ausgebildeten Arretierabschnitt 20 (vgl. Fig. 1b, 6a). Gemäß Figur 1b und 6a ist der Federring 3 somit federbeaufschlagt in die Schließstellung gedrückt, so dass dieser im Bereich seines Schwenkendes 13 am Schwenkanschlag 14 des Bolzens 2 anliegt. In der vorliegend in Figur 1b und 6a dargestellten Arretierstellung ist der Arretierabschnitt 20 des Federrings 3 in die Arretiervertiefung 19 des Bolzens 2 eingeschoben. Ein Rotationsanschlag 21 der Arretiervertiefung 19 vermeidet eine Rotation des Federrings 3 aus der Schließstellung in Richtung der Offenstellung, wenn der Arretierabschnitt in die Arretiervertiefung 19 eingreift, bzw. wenn sich dieser in der eingerückten Verriegelungsposition befindet. Gemäß Figur 6a befindet sich der Arretierabschnitt 20 somit in seiner in die Arretiervertiefung 19 eingreifenden Verriegelungsposition.

Zum Entriegeln des Federrings 3 muss der Arretierabschnitt 20 gemäß Figur 6b in eine Entriegelungsposition verschoben werden. Hierfür wird der Arretierabschnitt 20 im Wesentlichen in Axialrichtung der zugeordneten ersten Bohrung 7 verschoben. Sobald der Arretierabschnitt 20 gemäß Figur 6b in seine Entriegelungsposition verschoben ist, kann dieser entgegen der Federkraft aus der in Figur 1b dargestellten Schließstellung wieder zurück in seine in Figur 1a dargestellte Offenstellung geschwenkt werden.

Das Entriegeln des Federrings 3 kann, wie in Figur 6a und 6b dargestellt, durch die Interaktion des Federrings 3 mit dem Maschinenteil 4 erfolgen. Hierfür weist der Federring 3 einen Gleitabschnitt 22 auf. Der Gleitabschnitt 22 schließt sich gemäß dem vorliegenden Ausführungsbeispiel an den Arretierabschnitt 20 auf seiner dem dazugehörigen Lagerabschnitt 11 abgewandten Seite an diesen an. Der Arretierabschnitt 20 verläuft, insbesondere parallel zur Längsachse des Bolzenabschnitts 40, in Längsrichtung des Bolzens 2. Der Gleitabschnitt 22 verläuft im Gegensatz dazu schräg zur Längsachse des Bolzens 2. Sobald von einem Benutzer kopfseitig eine erste Verschiebekraft F1 auf den Bolzen 2 aufgebracht wird, kommt das Maschinenteil 4 an seinem Außenumfang am Gleitabschnitt 22 zum Anliegen (vgl. Fig. 6a). Bei weiterem Druck bewegt sich der Kopf 5 des Bolzens 2 weiter zum Maschinenteilen 4 hin, so dass gemäß Figur 6b der Arretierabschnitt 20 über das Maschinenteil 4 und den Gleitabschnitt 22 aus der Arretiervertiefung 19 in Querrichtung des Bolzens 2 über die Länge eines Verschiebeweges V herausgeschoben wird. Danach kann der Federring 2 in die Offenstellung zurückgeklappt werden.

Gemäß Figur 6a ist die dem ersten Lagerabschnitt 11 und/oder die dem Arretierabschnitt 20 zugeordnete erste Bohrung 7 als Durchgangsbohrung 23 ausgebildet. Die Durchgangsbohrung 23 erstreckt sich demnach in Querrichtung des Bolzens 2 von einem Vertiefungsboden 24 der Arretiervertiefung 19 bis zu einer davon abgewandten Längsseite des Bolzens 2 im Bereich des Kopfes 5. An der Längsseite befindet sich die Öffnung der Arretiervertiefung 19. Der erste Lagerabschnitt 11 des Federrings 3 erstreckt sich somit vollständig durch die Durchgangsbohrung 23.

Gemäß Figur 6a weist der Federring 3 einen Entriegelungsabschnitt 25 auf. Dieser ist benachbart zum ersten Lagerabschnitt 11 angeordnet. Der Entriegelungsabschnitt 25 steht über die Durchgangsbohrung 23 auf der der Arretiervertiefung 19 abgewandten Seite des Bolzens 2 über. Der Entriegelungsabschnitt 25 ragt demnach mit einer Entriegelungslänge E aus der Durchgangsbohrung 23 heraus. Die Entriegelungslänge E des Entriegelungsabschnitts 25 entspricht zumindest dem notwendigen Verschiebeweg V, der notwendig ist, um den Arretierabschnitt 20 in Querrichtung des Bolzens 2 aus der Arretiervertiefung 19 herausdrängen zu können.

An seinem dem ersten Lagerabschnitt 11 abgewandten Ende des Entriegelungsabschnitts 25 ist stirnseitig eine Druckfläche 26 angeordnet. Vorzugsweise ist die Druckfläche 26 gemäß dem in Figur 6a dargestellten Ausführungsbeispiel größer ausgebildet als die Drahtquerschnittsfläche des Federdrahtes, aus dem der Federring 3 hergestellt ist.

Zusätzlich oder alternativ zu dem mit dem Maschinenteil 4 korrespondierenden Gleitabschnitt 22 kann der Arretierabschnitt 20 somit über den Entriegelungsabschnitt 25 aus der Arretiervertiefung 19 um den notwendigen Verschiebeweg V verschoben werden. Hierfür muss lediglich in Axialrichtung zur Durchgangsbohrung 23 über die Druckfläche 26 eine zweite Verschiebekraft F2 aufgebracht werden. Hierdurch wird der Entriegelungsabschnitt 25 in die Durchgangsbohrung 23 hineingedrückt. Zugleich wird hierbei der Arretierabschnitt 20 aus der Arretiervertiefung 19 gedrängt. Dies ist insbesondere dann vorteilhaft, wenn der Klappsplint 1 geschlossen ist, ohne dass sich im inneren des Federrings 3 ein Maschinenteil 4 befindet. Hierdurch ist sichergestellt, dass der Klappsplint 1 auch in diesem Zustand einfach und ohne Beschädigung des Federrings 3 entriegelt werden kann.

Um ein sicheres Verriegeln des Arretierabschnitts 20 in der Arretiervertiefung 19 sicherstellen zu können, weist der Bolzen 2 zwei Queranschläge 27, 28 auf. Die beiden Queranschläge 27, 28 weisen gemäß Figur 6a in Bolzenquerrichtung zueinander einen ersten Querabstand auf. Des Weiteren weist der Federring 3 zwei Anschlagsbereiche 30, 31 auf, die mit jeweils einem der beiden Queranschläge 27, 28 korrespondieren.

Im vorliegend nicht visualisierten Ausbauzustand des Federrings 3 weisen die beiden Anschlagsbereiche 30, 31 des Federrings 3 zueinander einen zweiten Querabstand auf, der im Vergleich zum ersten Querabstand der beiden Queranschläge 27, 28 derart groß ist, dass die Anschlagsbereiche 30, 31 des Federrings 3 in der in Figur 6a dargestellten Schließstellung federbeaufschlagt gegen die jeweils korrespondierenden Queranschläge 27, 28 des Bolzens 2 gedrückt sind.

Gemäß dem in Figur 6a dargestellten Ausführungsbeispiel ist der zweite Querabstand zwischen den beiden Anschlagsbereichen 30, 31 des Federrings 3 im Vergleich zum ersten Querabstand zwischen den beiden Queranschlägen 27, 28 kleiner ausgebildet. Der Federring 3 ist somit in der in Figur 6a dargestellten Einbaulage im Bereich seiner beiden Enden 9, 10 in Querrichtung des Bolzens 2 aufgespreizt. Hierdurch ist der Arretierabschnitt 20 in der Schließstellung des Federrings 3 sicher in der Arretiervertiefung 19 arretiert, da der Federring 3 zum Bolzen 2 kein Spiel aufweist.

Gemäß dem vorliegenden Ausführungsbeispiel ist die zweite Bohrung 8 als Sackloch 32 ausgebildet. Das Sackloch 32 erstreckt sich somit von der der Arretiervertiefung 19 abgewandten Längsseite 35 des Bolzens 2 in den Kopf 5 hinein. An seinem Grund weist das Sackloch 32 einen Sacklochboden 33 auf. Im Bereich des zweiten Endes 10 des Federrings 3 liegt eine Stirnseite 34 des Federrings 3 am Sacklochboden 33 des Sacklochs 32 an. Der Sacklochboden 33 bildet somit einen ersten Queranschlag 27 und die mit diesem korrespondierende Stirnseite 34 den ersten Anschlagsbereich.

Des Weiteren liegt der Arretierabschnitt 20 zumindest in einem Teilbereich seiner Längsseite bzw. Anlageseite 41 am Vertiefungsboden 24 der Arretiervertiefung 19 an. Infolgedessen bildet die Anlageseite 41 des Arretierabschnitts 20 in ihrem Kontaktbereich mit dem Vertiefungsboden 24 den zweiten Anschlagsbereich 31 und der Vertiefungsboden 24 in seinem Kontaktbereich mit der Anlageseite 41 den zweiten Queranschlag 28. Vorzugsweise liegt der Arretierabschnitt 20 mit seiner gesamten Anlageseite 41 bündig an dem Vertiefungsboden 24 der Arretiervertiefung 19 an. Sowohl der Vertiefungsboden 24 als auch der Arretierabschnitt 20 sind somit zueinander parallel ausgebildet. Mittels der festgelegten Queranschläge 27, 28 ist der Arretierabschnitt 20 somit zuverlässig in der Arretiervertiefung 19 verriegelt.

Gemäß Figur 2 weist der Bolzen 2 neben der Arretiervertiefung 19 eine Ruhelagevertiefung 36 auf. Vorzugsweise sind die Arretiervertiefung 19 und die Ruhelagevertiefung 36 durch eine gemeinsame Aussparung ausgebildet. Die Arretiervertiefung 19 und die Ruhelagevertiefung 36 weisen demnach ausgehend von der zugeordneten ersten Längsseite 29 des Bolzens 2 die gleiche Tiefe auf.

In der Offenstellung liegt der Arretierabschnitt 20 des Federrings 3 in der Ruhelagevertiefung 36. Der Vertiefungsboden 24 der Ruhelagevertiefung 36 wirkt demnach in der in Figur 1a dargestellten Offenstellung ebenfalls als zweiter Queranschlag 28, so dass der Arretierabschnitt 20 in Querrichtung des Bolzens 2 federbeaufschlagt in die Ruhelagevertiefung 36 gedrückt ist.

Um ein entgegen die Schließstellung gerichtetes Überdrehen des Federrings 3 vermeiden zu können weist der Bolzen 2 einen Endanschlag 37 auf.

Des Weiteren umfasst der Bolzen 2, insbesondere gemäß Figur 1a, 2 und 5, eine Anlaufschräge 38. Die Anlaufschräge 38 verringert die Tiefe der Ruhelagevertiefung 36 von der Offenstellung ausgehend in Richtung der Schließstellung. Mittels der Anlaufschräge 38 ist somit ein Schwellwert definiert, der überwunden werden muss, um den in der Ruhelagevertiefung 36 befindlichen Arretierabschnitt 20 in Querrichtung des Bolzens 2 aus der Verriegelungsposition bzw. Verriegelungsstellung in die nach außen verschobene Entriegelungsposition bzw. Entriegelungsstellung verschieben zu können. Hierdurch kann sichergestellt werden, dass der sich in der Offenstellung befindliche Federring 3 nicht unbeabsichtigt in die Schließstellung schnappt, sondern erst beim Überwinden des durch die Anlaufschräge 38 definierten Schwellwertes aus der Offenstellung in die in Figur 1b dargestellte Schließstellung geklappt werden kann.

Zusätzlich oder alternativ ist es vorteilhaft, wenn der Bolzen 2 gemäß Figur 5 eine Rastkante 39 aufweist. Die Rastkante 39 befindet sich an dem der Ruhelagevertiefung 36 zugewandten Ende der Anlaufschräge 38. Hierdurch kann eine zusätzliche Schwellwertkraft definiert werden, die beim Verschwenken des Federrings 3 aus der Offenstellung in die Schließstellung überwunden werden muss. Vorzugsweise ist die Breite bzw. Höhe der Rastkante 39 gemäß Figur 5 kleiner oder gleich einem Drahtradius des Federrings, so dass der Arretierabschnitt 20 an der Rastkante 39 vorbeigleiten kann, wenn von einem Benutzer parallel zur Längsachse des Bolzens 2 eine entsprechende Kraft aufgebracht wird.

Gemäß Figur 6a und 6b weist der Federring 3 einen Ringabschnitt 42 auf, der das Schwenkende 13 bildet. Des Weiteren steht der zweite Lagerabschnitt 12, der mit seiner Stirnseite 34 an dem Sacklochboden 33 anliegt, über das Sackloch 32 bzw. über die zweite Längsseite 35 des Bolzens 2 hinaus. Der zweite Lagerabschnitt 12 ist über einen Verbindungsabschnitt 43 mit dem Ringabschnitt 42 verbunden. Der Verbindungsabschnitt 43 erstreckt sich schräg zur Längsachse des Bolzens 2. Der Federring 3 ist asymmetrisch ausgebildet.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Klappsplint
- 2: Bolzen
- 3: Federring
- 4: Maschinenteil
- 5: Kopf
- 6: Spitze
- 7: Erste Bohrung
- 8: Zweite Bohrung
- 9: Erstes Ende
- 10: Zweites Ende
- 11: Erster Lagerabschnitt
- 12: Zweiter Lagerabschnitt
- 13: Schwenkende
- 14: Schwenkanschlag
- 15: Aussparung
- 16: Erste Wand
- 17: Zweite Wand
- 18: Fase
- 19: Arretiervertiefung
- 20: Arretierabschnitt
- 21: Rotationsanschlag
- 22: Gleitabschnitt
- 23: Durchgangsbohrung
- 24: Vertiefungsboden
- 25: Entriegelungsabschnitt
- 26: Druckfläche
- 27: Erster Queranschlag
- 28: Zweiter Queranschlag
- 29: Erste Längsseite
- 30: Erster Anschlagsbereich
- 31: Zweiter Anschlagsbereich
- 32: Sackloch
- 33: Sacklochboden
- 34: Stirnseite
- 35: Zweite Längsseite
- 36: Ruhelagevertiefung
- 37: Endanschlag
- 38: Anlaufschräge
- 39: Rastkante
- 40: Bolzenabschnitt
- 41: Anlageseite
- 42: Ringabschnitt
- 43: Verbindungsabschnitt

- V: Verschiebeweg
- E: Entriegelungslänge
- F1: erste Verschiebekraft
- F2: zweite Verschiebekraft

## Patentansprüche

1. Klappsplint (1) zur Sicherung von Maschinenteilen (4) wie Achsen oder Steckbolzen, mit
einem Bolzen (2),
der im Bereich seines kopfseitigen Endes zwei Bohrungen (7, 8) und eine Arretiervertiefung (19) aufweist, und
einem offenen Federring (3),
der im Bereich seiner beiden Enden (9, 10) in den beiden Bohrungen (7, 8) drehbar gelagert ist, so dass dieser zwischen einer Offenstellung und einer Schließstellung verschwenkbar ist, und
einen mit der Arretiervertiefung (19) des Bolzens derart korrespondierenden Arretierabschnitt (20) aufweist,
dass der Federring (3) in der Schließstellung arretiert ist und aus dieser wieder in die Offenstellung schwenkbar ist, wenn der Arretierabschnitt (20) in Querrichtung des Bolzens ausgehend von einer Verriegelungsposition aus der Arretiervertiefung (19) heraus in eine Entriegelungsposition geschoben ist,
**dadurch gekennzeichnet,**
**dass** der Bolzen (2) eine Anlaufschräge (38) aufweist, mittels der der Arretierabschnitt (20) beim Verschwenken aus der Offenstellung in Richtung der Schließstellung in Querrichtung des Bolzens (2) nach außen in die Entriegelungsposition verschiebbar ist.

2. Klappsplint nach dem vorherigen Anspruch, **dadurch gekennzeichnet, dass** der Bolzen (2) zwei Queranschläge (27, 28) aufweist, die zueinander einen ersten Querabstand aufweisen, dass der Federring (3) zwei Anschlagsbereiche (30, 31) aufweist, die im ausgebauten Zustand des Federrings (3) zueinander einen zum ersten Querabstand derart unterschiedlichen zweiten Querabstand aufweisen, dass die Anschlagsbereiche (30, 31) des Federrings (3) in der Schließstellung federbeaufschlagt gegen die jeweils korrespondierenden Queranschläge (27, 28) des Bolzens gedrückt sind, und dass der Federring (3) im eingebauten Zustand im Bereich seiner beiden Enden (9, 10) auseinandergespreizt ist und/oder dass der erste Querabstand größer als der zweite Querabstand ist.

3. Klappsplint nach einem oder mehreren der vorherigen Ansprüche, **dadurch gekennzeichnet, dass** eine der beiden Bohrungen (7, 8) als Sackloch (32) und/oder die andere als Durchgangsbohrung (23) ausgebildet ist.

4. Klappsplint nach einem oder mehreren der vorherigen Ansprüche, **dadurch gekennzeichnet, dass** ein Sacklochboden (33) des Sacklochs (32) den einen Queranschlag (27) und/oder ein Vertiefungsboden (24) der Arretiervertiefung (19) den anderen Queranschlag (28) bildet und/oder
dass eine dem Sacklochboden (33) zugewandte Stirnseite (34) des Federrings (3) den einen Anschlagsbereich (30) und/oder eine dem Vertiefungsboden (24) zugewandte Anlageseite (41) des Arretierabschnitts den anderen Anschlagsbereich (31) bildet.

5. Klappsplint nach einem oder mehreren der vorherigen Ansprüche, **dadurch gekennzeichnet, dass** sich ein zum Arretierabschnitt (20) benachbarter Lagerabschnitt (11) des Federring (3) vollständig durch die Durchgangsbohrung (23) hindurcherstreckt und/oder dass der Federring (3) einen sich an den Lagerabschnitt (11) anschließenden Entriegelungsabschnitt (25) aufweist, der in der Schließstellung des Federrings (3) mit einer Entriegelungslänge (E) über die Durchgangsbohrung (23) hinaussteht.

6. Klappsplint nach einem oder mehreren der vorherigen Ansprüche, **dadurch gekennzeichnet, dass** die Entriegelungslänge (E) größer oder gleich eines Verschiebeweges (V) ist, der mindestens notwendig ist, um den Arretierabschnitt (20) aus der Arretiervertiefung (19) heraus von der Verriegelungsposition in die Entriegelungsposition zu verschieben.

7. Klappsplint nach einem oder mehreren der vorherigen Ansprüche, **dadurch gekennzeichnet, dass** die Entriegelungslänge (E) größer oder gleich einer Tiefe der Arretiervertiefung (19) ist.

8. Klappsplint nach einem oder mehreren der vorherigen Ansprüche, **dadurch gekennzeichnet, dass** der Federring (3) am Ende des Entriegelungsabschnitts (25) eine Druckfläche (26) aufweist, die im Vergleich zu einer Drahtquerschnittsfläche des Federrings (3) größer ausgebildet ist.

9. Klappsplint nach einem oder mehreren der vorherigen Ansprüche, **dadurch gekennzeichnet, dass** der Bolzen (2) unmittelbar benachbart zur Anlaufschräge (38) und/oder im Bereich ihres Anfangs eine Rastkante (39) aufweist.

10. Klappsplint nach einem oder mehreren der vorherigen Ansprüche, **dadurch gekennzeichnet, dass** die Breite der Rastkante (39) kleiner oder gleich einem Drahtradius des Federrings (3) ist und/oder dass sich die Rastkante (39) tangential zur Durchgangsbohrung (23) erstreckt.

11. Klappsplint nach einem oder mehreren der vorherigen Ansprüche, **dadurch gekennzeichnet, dass** der Bolzen (2) einen Endanschlag (37) aufweist, bis zu dem der Federring (3) aus der Schließstellung in Richtung der Offenstellung maximal verschwenkbar ist.

12. Klappsplint nach einem oder mehreren der vorherigen Ansprüche, **dadurch gekennzeichnet, dass** der Federring (3) einen, insbesondere zum Arretierabschnitt (20) benachbarten und/oder zur Längsachse des Bolzens (2) schräg verlaufenden, Gleitabschnitt (22) aufweist, mittels dem der Arretierabschnitt (20) in Querrichtung des Bolzens (2) aus der Verriegelungsposition in die Entriegelungsposition verschiebbar ist, wenn von außen kopfseitig in Axialrichtung des Bolzens (2) Kraft auf den Bolzen (2) aufgebracht wird und das dafür vorgesehene Maschinenteil (4) am Gleitabschnitt (22) zum Anliegen kommt.

## Claims

1. A folding cotter (1) for securing machine components (4) such as axles or locking pins, having
a pin (2),
comprising two holes (7, 8) and a locking recess (19) in the region of the head end thereof, and
an open spring ring (3),
rotatably supported in the two holes (7, 8) in the region of the two ends thereof (9, 10), so that said ring can be pivoted between an open position and a closed position, and
comprising a locking segment (20) corresponding to the locking recess (19) of the pin, such that
the spring ring (3) is locked in the closed position and can be pivoted out of the same into the open position again when the locking segment (20) is shifted out of the locking recess (19) into an unlocked position in the transverse direction of the pin, starting from a locked position,
**characterized in that**
the pin (2) comprises a bevel (38) by means of which the locking segment (20) can be shifted outward into the unlocked position when pivoting from the open position in the direction of the closed position in the direction transverse to the pin (2)

2. The folding cotter according to the preceding claim, **characterized in that** the pin (2) comprises two transverse stops (27, 28) having a first transverse distance from each other, that the spring ring (3) comprises two stop regions (30, 31) having a second transverse distance from each other differing from the first transverse distance in the unassembled state of the spring ring (3) such that the stop regions (30, 31) of the spring ring (3) are pressed against the corresponding transverse stops (27, 28) of the pin by a spring force in the closed position, and that the spring ring (3) is spread apart in the region of the two ends (9, 10) thereof in the installed state, and/or
that the first transverse distance is greater than the second transverse distance.

3. The folding cotter according to any one or more of the preceding claims, **characterized in that** one of the two holes (7, 8) is implemented as a blind hole (32) and/or the other is implemented as a through hole (23).

4. The folding cotter according to any one or more of the preceding claims, **characterized in that** a blind hole floor (33) of the blind hole (32) forms one transverse stop (27) and/or a recess floor (24) of the locking recess (19) forms the other transverse stop (28), and/or the end face (34) of the spring ring (3) facing toward the blind hole floor (33) forms one stop region (30) and/or a contact side (41) of the locking segment facing toward the recess floor (24) forms the other stop region (31).

5. The folding cotter according to any one or more of the preceding claims, **characterized in that** a bearing segment (11) of the spring ring (3) adjacent to the locking segment (20) extends completely through the through hole (23), and/or
that the spring ring (3) comprises an unlocking segment (25) connected to the bearing segment (11) and protruding past the through hole (23) by an unlocking length (E) in the closed position of the spring ring (3).

6. The folding cotter according to any one or more of the preceding claims, **characterized in that** the unlocking length (E) is greater than or equal to a displacement distance (V) required as a minimum for displacing the locking segment (20) out of the locking recess (19) from the locked position into the unlocked position.

7. The folding cotter according to any one or more of the preceding claims, **characterized in that** the unlocking length (E) is greater than or equal to a depth of the locking recess (19).

8. The folding cotter according to any one or more of the preceding claims, **characterized in that** the spring ring (3) comprises a pressure surface (26) at the end of the unlocking segment (25) being larger in design in comparison with a cross sectional area of the wire of the spring ring (3).

9. The folding cotter according to any one or more of the preceding claims, **characterized in that** the pin (2) comprises a latching edge (39) directly adjacent to the bevel (38) and/or in the region of the start thereof.

10. The folding cotter according to any one or more of the preceding claims, **characterized in that** the width of the latching edge (39) is less than or equal to a wire radius of the spring ring (3) and/or that the latching edge (39) extends tangentially to the through hole (23).

11. The folding cotter according to any one or more of the preceding claims, **characterized in that** the pin (2) comprises an end stop (37) up to which the spring ring (3) can be maximally pivoted from the closed position in the direction of the open position.

12. The folding cotter according to any one or more of the preceding claims, **characterized in that** the spring ring (3) comprises a sliding segment (22) particularly adjacent to the locking segment (20) and/or running at an angle to the longitudinal axis of the pin (2), by means of which the locking segment (20) can be displaced in the transverse direction of the pin (2) out of the locked position into the unlocked position, when a force is applied externally to the pin (2) on the head side in the axial direction of the pin (2) and the machine component (4) provided for this purpose contacts the sliding segment (22).

## Revendications

1. Goupille rabattable (1) pour la fixation de pièces (4) de machine telles que des axes ou des boulons embrochables, avec
une broche (2),
qui présente dans la zone de son extrémité de tête deux alésages (7, 8) et un approfondissement de verrouillage (19), et
un anneau élastique (3) ouvert,
qui est monté de manière rotative dans la zone de ses deux extrémités (9, 10) dans les deux alésages (7, 8) de sorte que celle-ci peut pivoter entre une position ouverte et une position fermée, et
présente une section de verrouillage (20) correspondant à l'approfondissement de verrouillage (19) de la broche de sorte que l'anneau élastique (3) est verrouillé dans la position fermée et peut à nouveau être pivoté de celle-ci dans la position ouverte lorsque la section de verrouillage (20) est poussée hors de l'approfondissement de verrouillage (19) dans la direction transversale de la broche, en partant d'une position de verrouillage dans une position de déverrouillage,
**caractérisée en ce que**
**en ce que** la broche (2) présente un biseau d'attaque (38) au moyen duquel la section de verrouillage (20) peut être déplacée vers l'extérieur, dans la position de déverrouillage, lors du pivotement à partir de la position ouverte dans la direction de la position fermée, dans la direction transversale de la broche (2).

2. Goupille rabattable selon la revendication précédente, **caractérisée en ce que** la broche (2) présente deux butées transversales (27, 28) qui présentent l'une par rapport à l'autre un premier espacement transversal, **en ce que** l'anneau élastique (3) présente deux zones de butée (30, 31) qui, à l'état démonté de l'anneau élastique (3), présentent l'une par rapport à l'autre un deuxième espacement transversal différent du premier espacement transversal de sorte que, dans la position fermée, les zones de butée (30, 31) de l'anneau élastique (3), soumis à une force de ressort, sont pressées contre les butées transversales (27, 28) respectivement correspondantes de la goupille, et **en ce que** l'anneau élastique (3), à l'état monté, est écarté dans la zone de ses deux extrémités (9, 10) et/ou
**en ce que** le premier espacement transversal est plus grand que le deuxième espacement transversal.

3. Goupille rabattable selon l'une quelconque ou plusieurs des revendications précédentes, **caractérisée en ce que** l'un des deux alésages (7, 8) est réalisé sous forme d'alésage borgne (32) et/ou l'autre sous forme d'alésage débouchant (23).

4. Goupille rabattable selon l'une quelconque ou plusieurs des revendications précédentes, **caractérisée en ce qu'**un fond (33) d'alésage borgne de l'alésage borgne (32) forme une butée transversale (27) et/ou un fond (24) d'approfondissement de l'approfondissement de verrouillage (19) forme l'autre butée transversale (28) et/ou
**en ce qu'**une face frontale (34) de l'anneau élastique (3) tournée vers le fond (33) d'alésage borgne forme une zone de butée (30) et/ou une face de contact (41) de la section de verrouillage tournée vers le fond (24) d'approfondissement forme l'autre zone de butée (31).

5. Goupille rabattable selon l'une quelconque ou plusieurs des revendications précédentes, **caractérisée en ce qu'**une section de palier (11) de l'anneau élastique (3) adjacente à la section de verrouillage (20) s'étend complètement à travers l'alésage débouchant (23) et/ou **en ce que** l'anneau élastique (3) présente une section de déverrouillage (25) qui se raccorde à la section de palier (11) et qui, dans la position fermée de l'anneau élastique (3), se projette au-delà de l'alésage débouchant (23) sur une longueur de déverrouillage (E).

6. Goupille rabattable selon l'une quelconque ou plusieurs des revendications précédentes, **caractérisée en ce que** la longueur de déverrouillage (E) est supérieure ou égale à une trajectoire déplacement (V) qui est au moins nécessaire pour déplacer la section de verrouillage (20) hors de l'approfondissement de verrouillage (19) de la position de verrouillage à la position de déverrouillage.

7. Goupille rabattable selon l'une quelconque ou plusieurs des revendications précédentes, **caractérisée en ce que** la longueur de déverrouillage (E) est supérieure ou égale à une profondeur de l'approfondissement de verrouillage (19).

8. Goupille rabattable selon l'une quelconque ou plusieurs des revendications précédentes, **caractérisée en ce que** l'anneau élastique (3) présente une surface de pression (26) à l'extrémité de la section de déverrouillage (25), qui est réalisée plus grande par rapport à une surface de section transversale de fil de l'anneau élastique (3).

9. Goupille rabattable selon l'une quelconque ou plusieurs des revendications précédentes, **caractérisée en ce que** la broche (2) présente un épaulement d'encliquetage (39) immédiatement adjacent au biseau d'attaque (38) et/ou dans la zone de son début.

10. Goupille rabattable selon l'une quelconque ou plusieurs des revendications précédentes, **caractérisée en ce que** la largeur de l'épaulement d'encliquetage (39) est inférieure ou égale à un rayon de fil de l'anneau élastique (3) et/ou que l'épaulement d'encliquetage (39) s'étend tangentiellement à l'alésage débouchant (23).

11. Goupille rabattable selon l'une quelconque ou plusieurs des revendications précédentes, **caractérisée en ce que** la broche (2) présente une butée de fin de course (37) jusqu'à laquelle l'anneau élastique (3) peut être pivoté au maximum depuis la position fermée en direction de la position ouverte.

12. Goupille rabattable selon l'une quelconque ou plusieurs des revendications précédentes, **caractérisée en ce que** l'anneau élastique (3) présente une section de glissement (22), notamment adjacente à la section de verrouillage (20) et/ou s'étendant obliquement par rapport à l'axe longitudinal de la broche (2), grâce à laquelle la section de verrouillage (20) peut être déplacée dans la direction transversale de la broche (2) de la position de verrouillage à la position de déverrouillage lorsqu'une force est appliquée sur la broche (2) de l'extérieur, du côté de la tête, dans la direction axiale de la broche (2), et que la partie de machine (4) prévue à cet effet vient en appui contre la section de glissement (22).
